# EUROPÄISCHE PATENTSCHRIFT

(11) **EP 1 736 332 B1**
(45) Veröffentlichungstag und Bekanntmachung des Hinweises auf die Patenterteilung: **01.02.2012**
(21) Anmeldenummer: 06012205.8
(22) Anmeldetag: 14.06.2006
(51) Int. Cl.: B60G 9/00

(54) **Vorrichtung zur kinematischen Führung eines gelenkten Fahrzeugrades an einer starren Vorderachse eines Nutzfahrzeugs**
Device for the kinematic guiding of a steered vehicle wheel for a rigid front axle of a utility vehicle
Dispositif pour le guidage cinématique d'une roue directrice de véhicule pour essieu avant rigide d'un véhicule utilitaire

(30) Priorität: 22.06.2005 DE 102005028852
(43) Veröffentlichungstag der Anmeldung: 27.12.2006
(73) Patentinhaber: MAN Truck & Bus AG, 80995 München (DE)
(72) Erfinder: Nickels, Thomas, Dipl.-Ing., 81541 München (DE); Teubner, Daniel, Dipl.-Ing., 85276 Pfaffenhofen (DE); Schmitt, Peter, Dipl.Ing. (FH), 80937 München (DE); Rossol, Martin, Dipl.-Ing. (FH), 80638 München (DE)

(56) Entgegenhaltungen:
- EP-A1- 0 630 554
- EP-A2- 0 873 891
- DE-A1- 10 247 699
- DE-A1- 19 809 209
- DE-A1- 19 840 135
- DE-A1- 19 919 845

## Beschreibung

Die Erfindung betrifft eine Vorrichtung zur kinematischen Führung eines gelenkten Fahrzeugrades an einer starren Vorderachse eines schweren Nutzfahrzeugs mit einem Radträger, an welchem das Rad drehbar zu lagern ist, und einer Radträgeranschlussstelle, an welcher der Radträger um eine einen Nachlaufwinkel aufweisende Lenkachse schwenkbar an einem mit dem Fahrzeugaufbau verbundenen Starrachskörper gelagert ist.

Aus DE 198 09 209 A1 ist eine starre Vorderachse für ein schweres Nutzfahrzeug bekannt. Der Starrachskörper der bekannten Vorderachse bildet mit einem rechten und einem linken Längslenker einen selbststabilisierenden Achsverbund, wobei die Längslenker an ihren vorderen Enden am Fahrzeugrahmen und an ihren hinteren Enden am Starrachskörper angebunden sind. Die Querführung der Achse wird von einem Panhardstab realisiert, welcher am einen Ende rahmenseitig und am anderen Ende achsseitig angebunden ist.

Bei der Festlegung der kinematischen Kenngrößen der Radaufhängung, wie Nachlauf, Spreizung, Nachlaufversatz, Spreizungsversatz und Lenkrollradius ergeben sich aufgrund der für Starrachsen üblichen Konstruktion Einschränkungen, so dass bei Reifenverschleiß, Seitenführung und Fahrverhalten nur Kompromisslösungen erreicht werden können. Dies ist auch durch die gegenseitige Beeinflussung der einzelnen Kenngrößen untereinander bedingt.

Die Nachlaufstrecke wird in herkömmlicher Weise durch einen Nachlaufwinkel, den die Lenkachse der Radaufhängung aufweist, erzeugt. Ein positiver Nachlaufwinkel ruft beim Einschlagen der Räder für eine Kurvenfahrt eine Sturzänderung hervor. Durch einen negativen Sturz am kurvenäußeren Rad und einen positiven Sturz am kurveninnern Rad erreicht man eine gute Seitenführung während der Kurvenfahrt. Ferner kann die Lenkachse, d. h. die Achsschenkeldrehachse des Radträgers räumlich so orientiert werden, dass der Nachlaufwinkel möglichst tangential an der Raderhebungskurve liegt, so dass Reaktionen der Achsführung auf Stoßanregungen von der Fahrbahn günstig beeinflusst werden. Durch die Nachlaufstrecke wird ferner in Verbindung mit aus der Seitenkraft resultierenden Momenten bei der Kurvenfahrt für eine selbsttätige Rückstellung der Lenkung gesorgt. Die Erhöhung des Nachlaufwinkels ist jedoch begrenzt, da eine zu große hieraus resultierende Nachlaufstrecke zusammen mit den Seitenkräften Rückstellmomente erzeugt, welche insbesondere bei hoher Querbeschleunigung erhebliche Haltekräfte an der Lenkung erfordern.

Aufgabe der Erfindung ist es daher, eine Vorrichtung der eingangs genannten Art zu schaffen, bei welcher die Grenzen, innerhalb denen die kinematischen Kenngrößen ohne negative Auswirkungen für die Radführung gewählt werden können, erweitert werden.

Diese Aufgabe wird erfindungsgemäß dadurch gelöst, dass in Seitenansicht des Fahrzeugs die Lenkachse gegenüber dem Radmittelpunkt einen Nachtaufversatz aufweist.

Der Nachlaufversatz ist in der Seitenansicht des Fahrzeugs der horizontale Abstand der Lenkachse bzw. Spreizachse vom Radmittelpunkt. Durch den Nachlaufversatz erreicht man eine Erweiterung der Grenzen, innerhalb denen der Nachlaufwinkel und daraus resultierend die Nachlaufstrecke gewählt werden können. Der Nachlaufversatz ist positiv, wenn die Nachlaufstrecke bei gleich bleibendem Nachlaufwinkel vergrößert wird und ist negativ, wenn bei gleichbleibendem Nachlaufwinkel die Nachlaufstrecke verkleinert wird. Bei positivem Nachlaufversatz liegt der Radmittelpunkt, in Vorwärtsfahrtrichtung gesehen, hinter der Lenkachse bzw. Spreizachse und bei negativem Nachlaufversatz liegt der Radmittelpunkt, in Vorwärtsfahrtrichtung gesehen, vor der Lenkachse bzw. Spreizachse. Bei vorgegebener Nachlaufstrecke kann durch einen negativen Nachlaufversatz ein großer Nachlaufwinkel ermöglicht werden. Hierdurch steht insbesondere zur Erzielung gewünschter Sturzänderungen bei Kurvenfahrt ein vergrößerter Bereich für den Nachlaufwinkel zur Verfügung, wobei im Rahmen der vorgegebenen Bauweise ein möglichst großer Nachlaufwinkel gewählt werden kann.. Dadurch lässt sich ein Optimum für die Seitenführung des Fahrzeugs hinsichtlich Reifenverschleiß und Fahrverhalten bei Kurvenfahrt erreichen. Außerdem bietet ein insbesondere negativer Nachlaufversatz die Möglichkeit, das Lenktrapez zu öffnen und die "Ackermann"-Bedingung mit verbesserter Annäherung zu erfüllen.

Bei der Erfindung können sowohl ein positiver als auch ein negativer Nachlaufversatz zum Einsatz kommen, wobei bevorzugt ein negativer Nachlaufversatz zur Anwendung kommt.

Vorzugsweise wird der Nachlaufversatz am Radträger, insbesondere Achsschenkel realisiert. Vorzugsweise handelt es sich um einen Achsschenkel, welcher zwei Lageröffnungen und einen Radlagerbolzen aufweist. Zur Bildung der Lenkachse bzw. Spreizachse ist in bekannter Weise ein am Starrachskörper befestigter Achsschenkelbolzen durch die Lageröffnungen am Achsschenkel gesteckt. Die Lageröffnungen sind am Achsschenkel so angeordnet, dass die den beiden Lageröffnungen gemeinsame Mittellinie, welche die Lenkachse bzw. Spreizachse definiert, gegenüber der vom Radlagerbolzen für das Rad gebildeten Drehachse versetzt angeordnet ist.

Vorzugsweise sind der Nachlaufversatz und die räumliche Anordnung der Lenkachse bzw. Spreizachse so vorgesehen, dass bei Kurvenfahrt das kurveninnere Rad eine positive Sturzänderung und das kurvenäußere Rad eine negative Sturzänderung ausführen. Hierbei kann die Radbremse, insbesondere Bremszange, entsprechend den Bauraumverhältnissen, auch vor oder oberhalb der Radmitte angeordnet werden. Um Reaktionsmomente von Fahrbahnanregungen möglichst niedrig zu halten, kann die Lenkachse des Radträgers möglichst tangential zu der Raderhebungskurve verlaufen.

Aufgrund der Bauweise von Starrachsen und der dadurch bedingten Anordnung der Radlagerung, der Bremse und von Dimensionierungsgrenzen des Radträgers bzw. Achsschenkels ist es bei Bauweisen ohne Nachlaufversatz erforderlich, den an der Radträgeranschlussstelle vorhandenen Faustpunkt so anzuordnen, dass bei herkömmlichen Spreizungswinkeln ein unerwünscht großer Lenkrollradius und Spreizungsversatz sich ergeben. Durch bei der Bremsung auftretende Kräfte werden über den Hebelarm des Lenkrollradius Momente erzeugt, die eine Drehung des Rades verursachen, insbesondere bei unterschiedlichen Bremsmomenten auf der rechten und linken Fahrzeugseite. Beispielsweise aufgrund unterschiedlicher Fahrbahnbeschaffenheit kann es zu einem Schiefziehen des Fahrzeugs kommen. Aufgrund des durch den Spreizungsversatz erzeugten Hebelarms, welcher auch als Störkrafthebelarm bezeichnet wird, entstehen in der Lenkung Momente, die aus Rollwiderstands- und Stoßkräften resultieren.

Aufgrund des oben erläuterten Versatzes von Radlagerbolzen und Achsschenkelbolzen, mit welchem der oben erläuterte Nachlaufversatz erzielt wird, erreicht man einen Bauraumgewinn, welcher eine Vergrößerung der Faustspur (Abstand zwischen dem linken und rechten Faustpunkt) ermöglicht. Damit besteht die Möglichkeit der Vergrößerung des Spreizungswinkels und der Reduzierung von Lenkrollradius und Spreizungsversatz. Diese führt zu einer Verringerung der oben erläuterten Störmomente auf die Lenkung.

Eine Erhöhung der Spreizung beeinflusst bei herkömmlichen Radlagerungen an Starrachsen bei Kurvenfahrten das Sturzverhalten der eingeschlagenen Räder nachteilig dahingehend, dass sowohl am kurveninneren als auch am kurvenäußeren Rad ein positiver Sturz verursacht wird. Durch den oben erläuterten Nachlaufwinkel, welcher insbesondere bei einem negativen Nachlaufversatz relativ groß gewählt werden kann, wird dieser negative Einfluss kompensiert, so dass die gewünschte Sturzänderung, nämlich negativer Sturz am kurvenäußeren Rad und positiver Sturz am kurveninneren Rad erzielt werden.

Anhand der Figuren wird die Erfindung noch näher erläutert. Es zeigt:
- Figur 1: perspektivisch einen Starrachskörper, welcher zu beiden Seiten einer starren Vorderachse für ein schweres Nutzfahrzeug Radaufhängungen, aufweist, die Ausführungsbeispiele der Erfindung sind;
- Figur 2: eine Seitenansicht eines Radträgers, bzw. Achsschenkels, welcher bei den Radaufhängungen der Figur 1 zum Einsatz kommt;
- Figur 3: in schematischer Darstellung ein weiteres Ausführungsbeispiel der Erfindung; und
- Figur 4: eine Radaufhängung mit fahrzeugbezogener Blickrichtung von vorne zur weiteren Erläuterung der Erfindung.

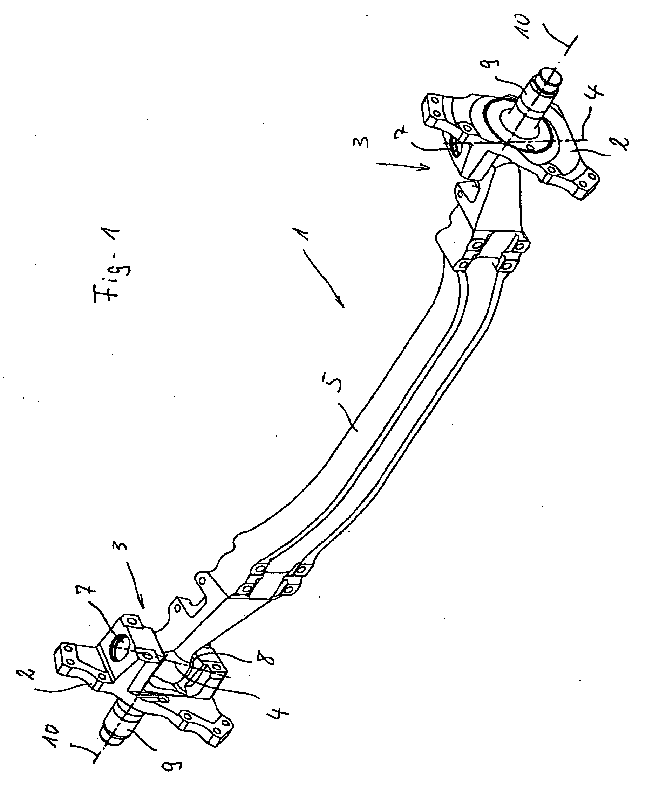

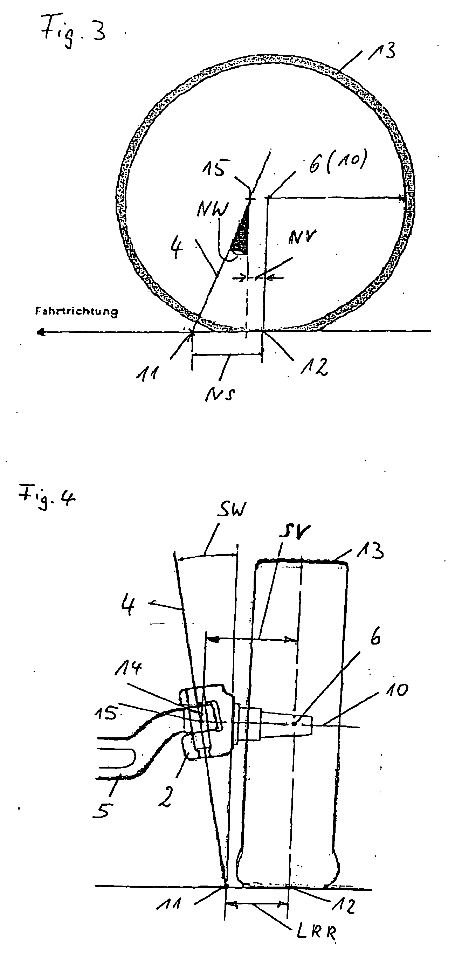

Von einer starren Vorderradachse 1 für ein schweres Nutzfahrzeug sind in der Figur 1 perspektivisch nur die zur Erläuterung der Erfindung erforderlichen Bauteile gezeigt. Beim dargestellten Ausführungsbeispiel besitzt die starre Vorderachse 1 einen Starrachskörper 5, welcher beispielsweise in eine starre Vorderachse eines schweren Nutzfahrzeugs, wie sie aus DE 198 09 209 A1 bekannt ist, eingebaut ist. Zur kinematischen Führung gelenkter Fahrzeugräder 13 (Figur 4) an der starren Vorderachse 1 sind an beiden Enden des Starrachskörpers 5 in Radträgeranschlussstellen 3 Radaufhängungen vorgesehen, welche Radträger 2 in Form von Achsschenkeln aufweisen. Jeder Radträger 2 besitzt einen Radlagerbolzen 9, an welchem um eine Drehachse 10 das Fahrzeugrad 13 drehbar gelagert ist.

Der jeweilige Radträger 2 ist um eine Lenkachse 4 an der Radträgeranschlussstelle 3 schwenkbar gelagert. Die Lenkachse bzw. Spreizachse 4 wird von einem Achsschenkelbolzen 14 (Figur 4) bestimmt, welcher in der jeweiligen Radträgeranschlussstelle 3 fest mit dem Starrachskörper 5 verbunden ist. Der Achsschenkelbolzen 14 ragt durch Lageröffnungen 7, 8 am Radträger 2.

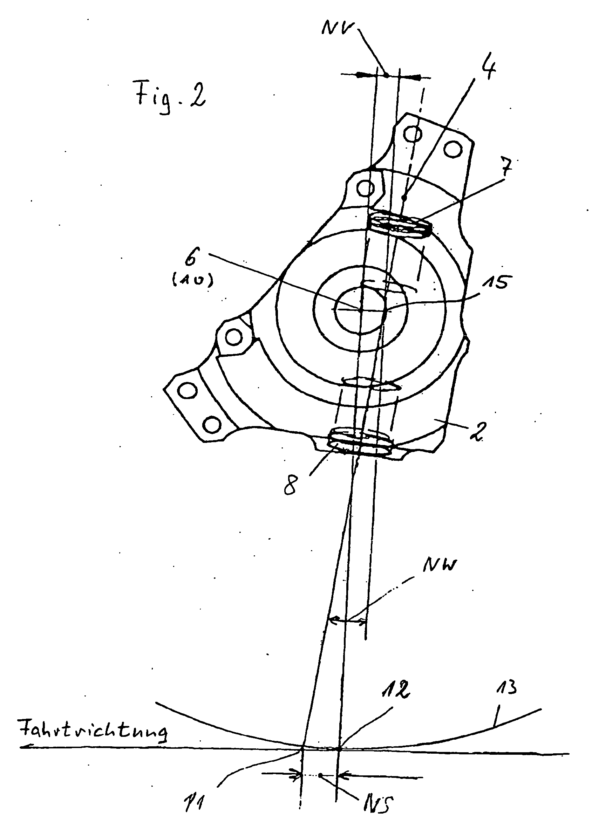

Die Lenkachse 4 besitzt einen Nachlaufwinkel NW (Figuren 2, 3). Der Nachlaufwinkel NW ist in Seitenansicht des Fahrzeugs die Neigung der Lenkachse 4 gegenüber einer vertikalen Bezugslinie. Durch den Nachlaufwinkel NW wird eine Nachlaufstrecke NS gebildet. Die Nachlaufstrecke ist in Seitenansicht des Fahrzeugs der Abstand zwischen einem Durchstoßpunkt 11 der Lenkachse 4 durch die Aufstandsfläche, auf welcher das Fahrzeugrad 13 aufsteht, und einem Radaufstandspunkt 12, welcher etwa die Mitte des Latsches bildet, in welchem der Fahrzeugreifen die Aufstandsfläche berührt. Der Radaufstandspunkt 12 liegt, wie aus Figur 4 zu ersehen ist, in einer Radmittelebene, welche die Drehachse 10 des Rades in einem Radmittelpunkt 6 schneidet. Der Radaufstandspunkt 12 liegt senkrecht unterhalb dem Radmittelpunkt 6.

Bei den erfindungsgemäßen Ausführungsformen der Radaufhängung besitzt die Lenkachse 4 gegenüber dem Radmittelpunkt 6 bzw. gegenüber der Drehachse 10 einen Nachlaufversatz NV. Bei dem in Figur 2 dargestellten Ausführungsbeispiel handelt es sich um einen negativen Nachlaufversatz, durch welchen wie aus Figur 2 zu ersehen ist, eine Verringerung der Nachlaufstrecke NS erreicht werden kann. Der Nachlaufversatz kann auch positiv ausgebildet sein, wie es schematisch in Figur 3 dargestellt ist. Hierdurch erreicht man eine Vergrößerung der Nachlaufstrecke NS. Die Verringerung (negativer Nachlaufversatz) und die Vergrößerung der Nachlaufstrecke (positiver Nachlaufversatz) erreicht man ohne Änderung des Nachlaufwinkels NW. Bei vorgegebener Nachlaufstrecke NS kann der Nachlaufwinkel NW unter Ausnützung des Nachlaufversatzes innerhalb eines relativ großen Winkelbereiches gewählt werden. Aufgrund des Nachlaufversatzes ergeben sich erweiterte Möglichkeiten zur Optimierung des Fahrverhaltens, da die kinematischen Kenngrößen innerhalb vergrößerter Bereiche gewählt werden können.

Beim positiven Nachlaufversatz erstreckt sich die Lenkachse (Spreizachse), in Vorwärtsfahrtrichtung gesehen, vor der Drehachse 10 des Rades bzw. vor dem Radmittelpunkt 6 und bei negativem Nachlaufversatz erstreckt sich die Lenkachse (Spreizachse) 4, in Vorwärtsfahrtrichtung gesehen, nach der Drehachse 10 des Rades bzw. nach dem Radmittelpunkt 6.

Die Lenkachse 4 besitzt ferner, wie aus Figur 4 zu ersehen ist, einen Spreizungswinkel SW. Der Spreizungswinkel SW bezeichnet in Fahrzeugvorderansicht bzw. im Querschnitt des Fahrzeugs die Neigung (Spreizung) der Lenkachse 4 (Spreizachse). Der Spreizungswinkel SW wird, wie der Nachlaufwinkel NW, bestimmt durch den Achsschenkelbolzen 14, welcher in die beiden Lageröffnungen 7, 8 des Achsschenkels bzw. Radträgers 2 eingesetzt ist. Der Spreizwinkel gibt die Neigung der dadurch gebildeten Lenkachse 4 gegenüber einer vertikalen Bezugslinie, welche durch den Durchstoßpunkt 11 der Lenksachse 4 durch die Radaufstandsfläche verläuft, an.

Hieraus ergibt sich als weitere kinematische Kenngröße ein Lenkrollradius LRR, welcher im Querschnitt des Fahrzeugs der Abstand zwischen dem Durchstoßpunkt 11 und dem Radaufstandspunkt 12 ist. Eine weitere kinematische Kenngröße ist ein Spreizungsversatz SV, welcher im Querschnitt des Fahrzeugs der horizontale Abstand des Radmittelpunktes 6 von einem Faustpunkt 15 ist. Der Faustpunkt 15 ist der Schnittpunkt einer horizontalen Ebene, durch den Radmittelpunkt 6 mit der Lenkachse 4. Bei der schematischen Darstellung in Figur 4 liegt die Drehachse 10 des Rades 13 in dieser horizontalen Ebene. Falls das Fahrzeugrad 13 einen Sturz aufweist, liegt die Drehachse 10 des Rades 13 außerhalb der horizontalen, durch den Radmittelpunkt 6 verlaufenden Ebene. Wie oben schon erläutert, liegen bei einem positiven Nachlaufversatz der Radmittelpunkt 6 und die Drehachse 10 des Rades 13 hinter der Lenkachse 4 (Figur 3) und bei einem negativen Nachlaufversatz NV liegen die Drehachse 10 des Rades 13 und der Radmittelpunkt 6 vor der Lenkachse 4 (Figur 2). Dementsprechend liegt bei positivem Nachlaufversatz NV (Figur 3) der Faustpunkt 15, in Vorwärtsfahrtrichtung gesehen, vor der Drehachse 10 des Rades 13 und bei negativem Nachlaufversatz NV (Figur 2) liegt der Faustpunkt 15 hinter der Drehachse 10 des Rades 13.

Wie eingangs schon erläutert, ergeben sich bei herkömmlichen Starrachsen unter Einsatz üblicher Spreizungswinkel ein unerwünscht großer Lenkrollradius LRR und Spreizungsversatz SV. Dies kann bei unterschiedlichen Bremsmomenten am linken und rechten Rad aufgrund unterschiedlicher Fahrbahnbeschaffenheit zu einem Schiefziehen des Fahrzeugs führen und ferner entstehen in der Lenkung Störmomente, die aus Rollwiderstands- und Stoßkräften resultieren. Wie schon erläutert, lässt sich durch den Nachlaufversatz, welcher vorzugsweise am Radträger (Achsschenkel) 2 verwirklicht wird, eine Vergrößerung der Faustspur, d. h. des Abstandes der beiden oben erläuterten Faustpunkte 15 an der rechten und linken Fahrzeugseite erreichen. Am Radträger (Achsschenkel) 2 wird der Nachlaufversatz NV verwirklicht durch den Versatz des Radiagerbolzens 9 gegenüber der gemeinsamen, die Lenkachse 4 definierenden Mittelinie der Lageröffnungen 7, 8 und des in die Lageröffnungen 7, 8 gesteckten Achsschenkelbolzens 14. Aufgrund der Vergrößerung der Faustspur können sowohl der Spreizungsversatz SV als auch der Lenkrollradius LRR verkleinert werden. Soweit durch eine Erhöhung der Spreizung ein positiver Sturz sowohl kurveninnen also auch kurvenaußen bei Kurvenfahrt an den Rädern verursacht wird, kann dem durch eine Erhöhung des Nachlaufwinkels, wie oben erläutert, entgegengewirkt werden.

### Bezugszeichen liste

- 1: Vorderachse
- 2: Radträger (Achsschenkel)
- 3: Radträgeranschlussstelle
- 4: Lenkachse (Spreizachse)
- 5: Starrachskörper
- 6: Radmittelpunkt
- 7, 8: Lageröffnungen am Radträger (Achsschenkel)
- 9: Radlagerbolzen
- 10: Drehachse des Rades
- 11: Durchstoßpunkt der Lenkachse (Spreizachse)
- 12: Radaufstandspunkt
- 13: Fahrzeugrad
- 14: Achsschenkelbolzen
- 15: Faustpunkt
- LRR: Lenkrollradius
- NS: Nachlaufstrecke
- NV: Nachlaufversatz
- NW: Nachlaufwinkel
- SV: Spreizungsversatz
- SW: Spreizungswinkel

## Patentansprüche

1. Vorrichtung zur kinematischen Führung eines gelenkten Fahrzeugrades an einer starren Vorderachse eines schweren Nutzfahrzeugs mit einem Radträger, an welchem das Fahrzeugrad drehbar zu lagern ist, und einer Radträgeranschlussstelle, an welcher der Radträger um eine einen Nachlaufwinkel aufweisende Lenkachse schwenkbar an einem mit dem Fahrzeugaufbau verbundenen Starrachskörper gelagert ist, **dadurch gekennzeichnet, dass** in Seitenansicht des Fahrzeugs die Lenkachse (4) gegenüber dem Radmittelpunkt (6) einen Nachlaufversatz (NV) aufweist.

2. Vorrichtung nach Anspruch 1, **dadurch gekennzeichnet, dass** der Nachlaufversatz (NV) ein positiver oder negativer Nachlaufversatz ist.

3. Vorrichtung nach einem der Ansprüche 1 oder 2, **dadurch gekennzeichnet, dass** der Nachlaufversatz (NV) am Radträger (2) verwirklicht ist.

4. Vorrichtung nach einem der Ansprüche 1 bis 3, **dadurch gekennzeichnet, dass** der Radträger (2) als Achsschenkel mit zwei Lageröffnungen (7, 8), in welche zur Bildung der Lenkachse (4) ein an der Radträgeranschlussstelle (3) vorgesehener Achsschenkelbolzen (14) einzusetzen ist, ausgebildet ist und einen Radlagerbolzen (9) aufweist, wobei zur Bildung des Nachlaufversatze (NV) eine den beiden Lageröffnungen (7, 8) gemeinsame, mit der Lenkachse (4) zusammenfallende Mittellinie gegenüber der vom Radlagerbolzen (9) gebildeten Drehachse (10) des Fahrzeugrades (13) in der Seitenansicht versetzt angeordnet ist.

5. Vorrichtung nach einem der Ansprüche 1 bis 4, **dadurch gekennzeichnet, dass** der Nachlaufwinkel (NW) so bemessen ist, dass bei Kurvenfahrt am kurveninneren Fahrzeugrad eine positive Sturzänderung und am kurvenäußeren Fahrzeugrad eine negative Sturzänderung erfolgt.

6. Vorrichtung nach einem der Ansprüche 1 bis 5, **dadurch gekennzeichnet, dass** der Spreizungswinkel (SW) und der Nachlaufwinkel (NW) so bemessen sind, dass bei Kurvenfahrt am kurveninneren Fahrzeugrad eine positive Sturzänderung und am kurvenäußeren Fahrzeugrad eine negative Sturzänderung erfolgen.

7. Vorrichtung nach einem der Ansprüche 1 bis 6, **dadurch gekennzeichnet, dass** die Lenkachse (4) des Radträgers tangential oder annährend tangential zu der Raderhebungskurve verläuft.

## Claims

1. Device for the kinematic guidance of a steered vehicle wheel on a rigid front axle of a heavy utility vehicle, having a wheel carrier for the vehicle wheel to be rotatably mounted on and having a wheel carrier connecting point at which the wheel carrier is mounted, so as to be pivotable about a steering axis which has a castor angle, on a rigid axle body which is connected to the vehicle body, **characterized in that**, as seen in a side view of the vehicle, the steering axis (4) has a castor offset (NV) with respect to the wheel central point (6).

2. Device according to Claim 1, **characterized in that** the castor offset (NV) is a positive or negative castor offset.

3. Device according to either of Claims 1 and 2, **characterized in that** the castor offset (NV) is realized on the wheel carrier (2).

4. Device according to one of Claims 1 to 3, **characterized in that** the wheel carrier (2) is designed as a steering knuckle, having two mounting openings (7, 8) for a steering-knuckle pin (14) provided at the wheel carrier connecting point (3) to be inserted into in order to form the steering axis (4), and has a wheel bearing bolt (9), wherein to form the castor offset (NV), a central line which is common to the two mounting openings (7, 8) and which coincides with the steering axis (4) is arranged offset, as seen in a side view, with respect to the axis of rotation (10), formed by the wheel bearing bolt (9), of the vehicle wheel (13).

5. Device according to one of Claims 1 to 4, **characterized in that** the castor angle (NW) is dimensioned such that, during cornering, a positive camber change takes place at the vehicle wheel at the inside of the curve and a negative camber change takes place at the vehicle wheel at the outside of the curve.

6. Device according to one of Claims 1 to 5, **characterized in that** the steering axis inclination (SW) and the castor angle (NW) are dimensioned such that, during cornering, a positive camber change takes place at the vehicle wheel at the inside of the curve and a negative camber change takes place at the vehicle wheel at the outside of the curve.

7. Device according to one of Claims 1 to 6, **characterized in that** the steering axis (4) of the wheel carrier runs tangentially or approximately tangentially with respect to the wheel lift curve.

## Revendications

1. Dispositif pour le guidage cinématique d'une roue directrice de véhicule pour essieu avant rigide d'un véhicule utilitaire lourd avec un support de roue au niveau duquel la roue de véhicule est logée de façon à pouvoir tourner et avec un point de raccord de support de roue au niveau duquel le support de roue est logé de façon à pouvoir pivoter autour d'un essieu directeur comportant un angle de chasse au niveau d'un corps d'essieu rigide relié à la caisse du véhicule, **caractérisé en ce qu'**en vue de côté du véhicule, l'essieu directeur (4) présente un déport de chasse (NV) par rapport au centre de la roue (6).

2. Dispositif selon la revendication 1, **caractérisé en ce que** le déport de chasse (NV) est un déport de chasse positif ou négatif.

3. Dispositif selon l'une quelconque des revendications 1 ou 2, **caractérisé en ce que** le déport de chasse (NV) agit au niveau du support de roue (2).

4. Dispositif selon l'une quelconque des revendications 1 à 3, **caractérisé en ce que** le support de roue (2) prend la forme d'un bord d'essieu équipé de deux ouvertures de roulement (7, 8) dans lesquelles un boulon de bord d'essieu (14) prévu au niveau du point de raccord de support de roue (3) peut être inséré pour la formation de l'essieu directeur (4) et qui comporte un boulon de palier de roue (9), une ligne médiane coïncidant avec l'essieu directeur (4) et commune aux deux ouvertures de roulement (7, 8) étant disposée de façon décalée par rapport à l'axe de rotation (10) de la roue de véhicule (13) formé par le boulon de palier de roue (9), vu de côté, pour la formation du déport de chasse (NV).

5. Dispositif selon l'une quelconque des revendications 1 à 4, **caractérisé en ce que** l'angle de chasse (NW) est dimensionné de telle sorte que lors d'une conduite en virage, il se produit une variation de carrossage positive au niveau de la roue de véhicule se plaçant à l'intérieur du virage et une variation de carrossage négative au niveau de la roue de véhicule se plaçant à l'extérieur du virage.

6. Dispositif selon l'une quelconque des revendications 1 à 5, **caractérisé en ce que** l'angle d'inclinaison du pivot de fusée (SW) et l'angle de chasse (NW) sont dimensionnés de telle sorte qu'en cas de conduite en virage, il se produit une variation de carrossage positive au niveau de la roue de véhicule placée à l'intérieur du virage et une variation de carrossage négative au niveau de la roue de véhicule placée à l'extérieur du virage.

7. Dispositif selon l'une quelconque des revendications 1 à 6, **caractérisé en ce que** l'essieu directeur (4) du support de roue s'étend tangentiellement ou quasi tangentiellement par rapport à la courbe de soulèvement de la roue.
